# EUROPEAN PATENT APPLICATION

(11) **EP 2 146 515 A1**
(43) Date of publication of application: **20.01.2010**
(21) Application number: 08752211.6
(22) Date of filing: 28.04.2008
(51) Int. Cl.: H04Q 7/38, H04L 1/00, H04L 12/56

(54) **BASE STATION DEVICE AND COMMUNICATION CONTROL METHOD**

(30) Priority: 01.05.2007 JP 2007121302
(71) Applicant: NTT DoCoMo, Inc., Chiyoda-ku Tokyo 100-6150 (JP)
(72) Inventor: MORIMOTO, Akihito, Tokyo 100-6150 (JP); MIKI, Nobuhiko, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2008/058201
(87) International publication number: WO 2008/136463

(57) **Abstract**

User apparatuses transmit feedback information for reporting that multicast data and/or broadcast data do not satisfy required quality. A base station apparatus for transmitting multicast data and/or broadcast data to the user apparatuses includes: a feedback information determination unit configured to obtain the number of notifications of the feedback information, and to determine whether to perform adaptive modulation and coding based on the number of notifications; and a MCS control unit configured to change a combination of a modulation scheme and a channel coding scheme which are applied to multicast data and/or broadcast data according to a determination result of the feedback information determination unit.

## Description

### TECHNICAL FIELD

The present invention relates to a radio communication system. More particularly, the present invention relates to a base station apparatus and a communication control method.

### BACKGROUND ART

3GPP that is a standardization group of W-CDMA is studying a communication scheme that becomes a successor to W-CDMA, HSDPA and HSUPA, that is, 3GPP is studying Long Term Evolution (LTE). As radio access schemes, OFDM (Orthogonal Frequency Division Multiplexing) is being studied for downlink, and SC-FDMA (Single-Carrier Frequency Division Multiple Access) is being studied for uplink (refer to non-patent document 1, for example).

OFDM is a scheme for dividing a frequency band into a plurality of narrow frequency bands (subcarriers) so as to perform transmission by carrying data on each subcarrier. By arranging the subcarriers on frequencies densely without interfering with each other while a part of them overlap, high speed transmission is realized so that efficiency of use of frequency increases.

SC-FDMA is a transmission scheme that can decrease interference among terminals by dividing frequency band and performing transmission using frequency bands that are different among a plurality of terminals. Since the SC-FDMA has characteristics that variation of transmission power becomes small, low power consumption in the terminal and wide coverage can be realized.

LTE is a system in which a plurality of mobile stations share one or more physical channels in the uplink and the downlink for performing communication. The channel shared by the plurality of mobile stations is generally called a shared channel. In LTE, the channel is the Physical Uplink Shared Channel (PUSCH) in the uplink, and is the Physical Downlink Shared Channel (PDSCH) in the downlink.

In the communication system using the above-mentioned shared channel, it is necessary to signal information indicating which mobile station is assigned the shared channel for each subframe (1 ms in LTE). In LTE, a control channel used for the signaling is called Physical Downlink Control Channel (PDCCH) or called Downlink L1/L2 Control Channel (DL L1/L2 Control Channel). Information of the physical downlink control channel includes, for example, downlink (DL) scheduling information, acknowledgement information (ACK/NACK), uplink (UL) scheduling grant, overload indicator, transmission power control command bit and the like (refer to non-patent document 2, for example).

The DL scheduling information and the UL scheduling grant correspond to the information for signaling which mobile station is assigned the shared channel. The DL scheduling information includes, for example, assignment information of resource blocks in downlink, ID of UE, the number of streams, information on precoding vector, data size, modulation scheme, information on HARQ (hybrid automatic repeat request), and the like with respect to the downlink shared channel. The UL scheduling grant includes, for example, assignment information of resource blocks in uplink, ID of UE, data size, modulation scheme, uplink transmission power information, demodulation reference signal in uplink MIMO, and the like with respect to the uplink shared channel.

By the way, like mobile TV, MBMS (Multimedia Broadcast Multicast Service) is proposed for broadcasting contents to user apparatuses on cellular networks. Different from unicast in which individual connection is established for each session, point-to-multipoint connection is used in the MBMS. By using the MBMS, the number of channels provided in the network can be further increased.

As the MBMS service, single-cell mode and MBSFN mode (Multicast Broadcast over Single Frequency Network mode) are proposed.

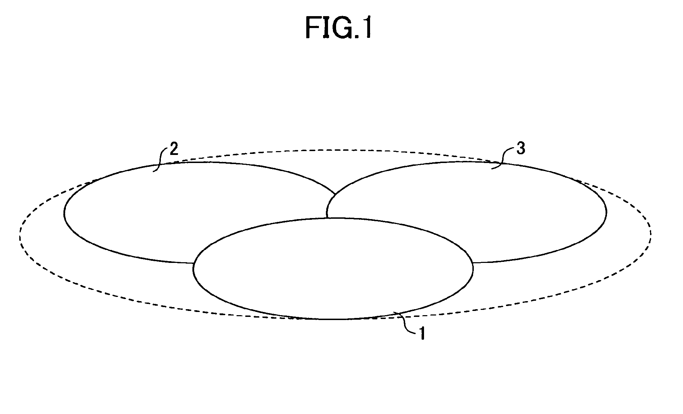

In the single-cell mode, MBMS data is transmitted from only one cell, unicast data or different MBMS data is transmitted for other cell. In a cell configuration shown in the Fig.1, MBMS data is transmitted in the cell 1, and unicast data or MBMS data different from MBMS data transmitted in the cell 1 is transmitted in cells 2 and 3.

In the MBSFN mode, the same MBMS data is transmitted from a plurality of cells. In the cell configuration shown in Fig.1, the same MBMS is are transmitted from the cells 1, 2 and 3. Each user receives MBMS signals from the cells by using soft combining so that each user can receive MBMS data with high quality. [Non-patent document 1] 3GPP TR 25.814 (V7.0.0), "Physical Layer Aspects for Evolved UTRA," June 2006 [Non-patent document 2] 3GPP R1-070103, Downlink L1/L2 Control Signaling Channel Structure: Coding

### DISCLOSURE OF THE INVENTION

### PROBLEM TO BE SOLVED BY THE INVENTION

However, there are following problems in the above-mentioned background art.

As mentioned above, the same MBMS data is transmitted to every user desiring transmission of MBMS data in a service area. In the case of unicast, adaptive modulation and coding, retransmission control and the like are applied. These controls are performed based on feedback information from the user apparatus. In MBMS, since the same information is transmitted to a plurality of users, adaptive modulation and coding, retransmission control and the like are not applied. Therefore, in MBMS, the feedback information from the user apparatus is not used. For example, assuming that retransmission control is performed, the base station apparatus cannot perform control when there are users that successfully received a signal and users that failed to receive the signal.

In addition, in MBMS, when there is imbalance between users positioned at a cell edge and users positioned at a center area of the cell, the MBMS data is transmitted on the condition that the users at the cell edge can receive the data. When the MBMS data is transmitted on that condition, users at the center area of the cell receive the data with excessive quality.

However, also in MBMS, it can be expected that characteristics improve under a specific condition by applying adaptive modulation and coding, retransmission control, and the like.

In view of the above-mentioned problem, an object of the present invention is to provide a base station apparatus and a communication control method which can apply adaptive modulation and coding in MBMS.

### MEANS FOR SOLVING THE PROBLEM

In order to overcome the above problem, one aspect of the present invention relates to a base station apparatus for transmitting multicast data and/or broadcast data to a user apparatus,
wherein the user apparatus transmits feedback information for reporting that the multicast data and/or the broadcast data do not satisfy required quality, the base station apparatus including:
a feedback information determination unit configured to obtain the number of notifications of the feedback information, and to determine whether to perform adaptive modulation and coding based on the number of notifications; and
a control unit configured to change a combination of a modulation scheme and a channel coding scheme which are applied to multicast data and/or broadcast data according to a determination result of the feedback information determination unit.

Another aspect of the present invention relates to a communication control method in a base station apparatus for transmitting multicast data and/or broadcast data to a user apparatus,
wherein the user apparatus transmits feedback information for reporting that the multicast data and/or the broadcast data do not satisfy required quality, the communication control method comprising:
a feedback information receiving step of receiving feedback information transmitted from each user apparatus;
a feedback information determination step of obtaining the number of notifications of the feedback information, and determining whether to perform adaptive modulation and coding based on the number of notifications; and
a control step of changing a combination of a modulation scheme and a channel coding scheme which are applied to the multicast data and/or the broadcast data according to a determination result in the feedback information determination step.

### EFFECT OF THE PRESENT INVENTION

According to the present invention, a base station apparatus and a communication control method which can apply adaptive modulation and coding in MBMS can be realized.

### BRIEF DESCRIPTION OF THE DRAWINGS

Fig. 1 is an explanatory diagram showing the single-cell mode and the MBSFN mode in the MBMS service;
Fig. 2 is a block diagram showing a radio communication system (MBMS system) of an embodiment of the present invention;
Fig. 3 is a partial block diagram showing a base station apparatus of an embodiment of the present invention;
Fig. 4 is an explanatory diagram showing retransmission control of an embodiment of the present invention;
Fig. 5 is an explanatory diagram showing retransmission control of an embodiment of the present invention;
Fig. 6 is an explanatory diagram showing retransmission control of an embodiment of the present invention;
Fig. 7 is an explanatory diagram showing retransmission control of an embodiment of the present invention;
Fig. 8 is an explanatory diagram showing retransmission control of an embodiment of the present invention;
Fig. 9 is a flowchart showing operation of the base station apparatus of an embodiment of the present invention;
Fig. 10 is a flowchart showing operation of the base station apparatus of an embodiment of the present invention;
Fig. 11 is a block diagram showing a radio communication system (MBMS system) of an embodiment of the present invention; and
Fig. 12 is a partial block diagram showing an upper station and a base station apparatus of an embodiment of the present invention.

### Description of reference signs

1, 2, 3, 50 cell
100₁, 100₂, 100₃, 100ₙ mobile station
200 base station apparatus
202 MCS/retransmission control unit
204 data transmission unit
206 feedback information determination unit
208 feedback information reception unit
300 access gateway apparatus
302 feedback information reception unit
304 feedback information determination unit
400 core network
1000 radio communication system (MBMS system)

### PREFERRED EMBODIMENTS FOR CARRYING OUT THE INVENTION

In the following, embodiments of the present invention are described with reference to figures. In all of the figures for explaining embodiments, the same reference symbols are used for parts having the same function, and repeated descriptions are not given.

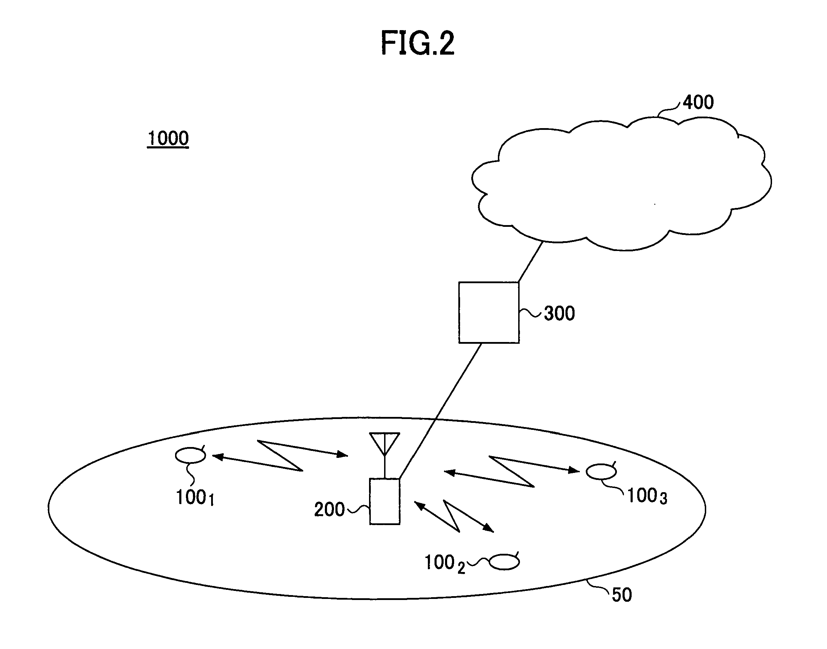

A radio communication system including mobile stations and a base station apparatus of an embodiment of the present invention is described with reference to Fig. 2.

The radio communication system 1000 is a system to which Evoled UTRA and UTRAN (Another name:
Long Term Evolution, or Super 3G) is applied, for example. The radio communication system 1000 includes a base station apparatus (eNB: eNode B) 200 and a plurality of mobile stations 100ₙ (100₁, 100₂, 100₃, ···100ₙ, n is an integer and n>0). The base station apparatus 200 is connected to an upper station, that is, an access gateway apparatus 300, for example, and the access gateway apparatus 300 is connected to a core network 400. The mobile station 100ₙ is communicating with the base station apparatus 200 by Evolved UTRA and UTRAN in a cell 50.

In the following, since the mobile stations (100₁, 100₂, 100₃, ···100ₙ) have the same configurations, functions and states, a user apparatus 100ₙ is described unless otherwise mentioned. For the sake of convenience of explanation, although the entity which communicates with the base station apparatus by radio is the mobile station, it may be a user apparatus (UE: User Equipment) which includes a mobile terminal and a fixed terminal, more generally.

As radio access schemes, the radio communication system 1000 uses OFDM (orthogonal frequency division multiplexing) in the downlink, and uses SC-FDMA (single carrier - frequency division multiple access) in the uplink. As mentioned above, OFDM is a multi-carrier transmission scheme in which a frequency band is divided into a plurality of narrow frequency bands (subcarriers) so that transmission is performed by mapping data on each subcarrier. SC-FDMA is a single carrier transmission scheme that can decrease interference among terminals by dividing a frequency band for each terminal and by using different frequency bands with each other by a plurality of terminals.

In the following, communication channels in the Evolved UTRA and UTRAN are described.

In the downlink, the physical downlink shared channel (PDSCH) shared by each mobile station 100ₙ and the physical downlink control channel (PDCCH) are used. The physical downlink control channel is also called a downlink L1/L2 control channel. User data, that is, a normal data signal is transmitted by the physical downlink shared channel. Also, the physical downlink control channel transmits downlink scheduling information, acknowledgment information (ACK/NACK), uplink scheduling grant, overload indicator, transmission power control command bit and the like.

The DL scheduling information includes, for example, ID of a user performing communication using the physical downlink shared channel, information of transport format of the user data, that is, information related to data size, modulation scheme and HARQ, and includes assignment information of downlink resource blocks, and the like.

The UL scheduling grant includes, for example, ID of a user performing communication using the physical uplink shared channel, information of transport format of the user data, that is, information related to data size and modulation scheme, and includes assignment information of the uplink resource blocks, information on transmission power of the uplink shared channel, and the like. The uplink resource block corresponds to frequency resources, and is also called a resource unit.

The acknowledgement information (ACK/NACK) is acknowledgement information on the uplink shared channel.

In the uplink, the physical uplink shared channel (PUSCH) shared by each mobile station 100ₙ and the physical uplink control channel are used. The physical uplink shared channel transmits user data, that is, the normal data signal. In addition, the physical uplink control channel transmits downlink quality information (CQI: Channel Quality Indicator) used for scheduling processing for the physical downlink shared channel, and for the adaptive modulation/demodulation and coding processing (AMCS: adaptive modulation and coding scheme), and transmits acknowledgment information of the physical downlink shared channel. The contents of the acknowledgment information are represented as either one of Acknowledgement (ACK) indicating that a transmission signal has been properly received or Negative Acknowledgement (NACK) indicating that the signal has not been properly received.

In addition to the CQI and the acknowledgement information, the physical uplink control channel may transmit a scheduling request requesting resource assignment of the uplink shared channel, resource request in persistent scheduling, and the like. The resource assignment of the uplink shared channel means that the base station apparatus reports, using the physical downlink control channel of a subframe, information to the mobile station indicating that the mobile station is permitted to perform communication using the uplink shared channel in a following subframe.

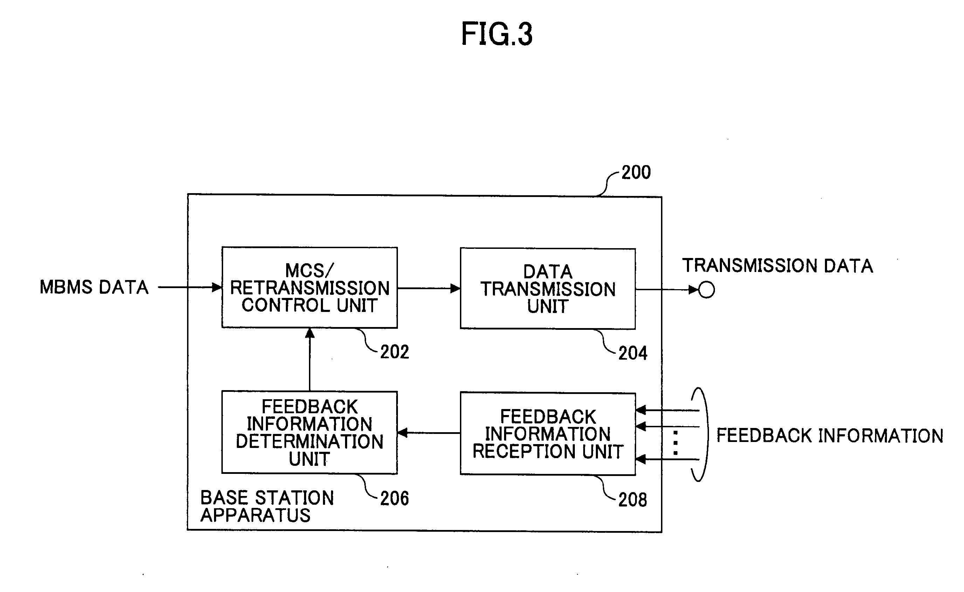

The base station apparatus 200 of an embodiment of the present invention is described with reference to Fig. 3.

The base station apparatus 200 of the present embodiment includes a MCS/retransmission control unit 2021, a data transmission unit 204, a feedback determination unit 206, and a feedback information reception unit 208.

When multicast data and/or broadcast data (to be referred to as MBMS data hereinafter) transmitted from the base station 200 do not satisfy required quality, the user apparatus 100 reports control information indicating that MBMS data does not satisfy the required quality as feedback information by using higher layer signaling. Although control delay becomes large by this method, it is not a problem since the method is applied to control of a long cycle equal to or grater than 1 TTI. By configuring the system like this, quality of control information can be maintained.

The control information transmitted from the user apparatus 100 is received by the feedback information reception unit 208, and is input to the feedback determination unit 206.

The feedback determination unit 206 determines whether to perform adaptive modulation and coding control and/or retransmission control based on feedback information from the user apparatus 100, and inputs the determination result to the MCS/retransmission control unit 202. If the number of pieces of the received feedback information is equal to or greater than a predetermined first adaptive modulation and coding threshold which is determined beforehand, the feedback determination unit 206 determines to perform adaptive modulation and coding control.

More particularly, in the combination of the modulation scheme and the channel coding scheme (MCS set), the modulation multilevel number and/or the channel coding rate are/is changed in a direction of lowering the modulation multilevel number and/or the channel coding rate. That is, control is performed to decrease the modulation multilevel number and/or to lower the channel coding rate.

In addition, if the number of pieces of the received feedback information is equal to or greater than a predetermined retransmission control threshold which is determined beforehand, the feedback determination unit 206 determines to perform retransmission control. In addition, if the number of pieces of the received feedback information is equal to or less than a predetermined second adaptive modulation and coding threshold which is determined beforehand, the feedback determination unit 206 determines to perform adaptive modulation and coding control. The second adaptive modulation and coding threshold is equal to or less than the first adaptive modulation and coding threshold.

More particularly, in the combination of the modulation scheme and the channel coding scheme (MCS set), the modulation multilevel number and/or the channel coding rate are/is changed in a direction of raising the modulation multilevel number and/or the channel coding rate. That is, control is performed to increase the modulation multilevel number and/or to raise the channel coding rate.

As to cell designing, the cell is designed such that transmission is performed on the condition that a predetermined ratio of users can receive. Then, it is desirable that each of the first adaptive modulation and coding threshold, and the retransmission control threshold is a value corresponding to a number which is equal to or greater than (100 - a predetermined ratio) (%) of the number of assumed users. In addition, it is desirable that the second adaptive modulation and coding threshold is a value corresponding to a number which is equal to or less than (100 - a ratio no less than a predetermined ratio) (%) of the number of assumed users. The first adaptive modulation and coding threshold may be or may not be the same as the retransmission control threshold, and the first adaptive modulation and coding threshold may be or may not be the same as the second adaptive modulation and coding threshold.

When the number of users desiring reception of MBMS can be identified, whether adaptive modulation and coding control and/or retransmission control are/is performed may be determined based on a ratio of the number of pieces of feedback information to the number of users.

The MCS/retransmission control unit 202 performs adaptive modulation and coding control and/or retransmission control based on information indicating whether to perform adaptive modulation and coding control and/or information whether to perform retransmission control input from the feedback determination unit 206.

For example, when the MCS/retransmission control unit 202 receives, from the feedback determination unit 206, an instruction for changing the modulation multilevel number in the direction for lowering it and/or for changing the channel coding rate in the direction for lowering it, the MCS/retransmission control unit 202 sends, to the data transmission unit 204, an instruction for decreasing the modulation multilevel number and/or an instruction for decreasing the channel coding rate. That is, the MCS/retransmission control unit 202 sends an instruction (instruction for lowering MCS), to the data transmission unit 204, for changing an applied combination of the modulation scheme and the channel coding scheme into a combination (MCS set) of the modulation scheme and the channel coding scheme including a modulation multilevel number and/or channel coding rate which are/is smaller than currently applied modulation multilevel number and/or channel coding rate.

In addition, when the MCS/retransmission control unit 202 receives, from the feedback determination unit 206, an instruction for changing the modulation multilevel number in the direction for raising it and/or for changing the channel coding rate in the direction for raising it, the MCS/retransmission control unit 202 sends, to the data transmission unit 204, an instruction for increasing the modulation multilevel number and/or an instruction for raising the channel coding rate. That is, the MCS/retransmission control unit 202 sends an instruction (instruction for raising MCS), to the data transmission unit 204, for changing an applied combination of the modulation scheme and the channel coding scheme into a combination (MCS set) of the modulation scheme and the channel coding scheme including a modulation multilevel number and/or channel coding rate which are/is greater than currently applied modulation multilevel number and/or channel coding rate.

In addition, when the MCA/retransmission control unit 202 receives an instruction for performing retransmission control from the feedback determination unit 206, the MCA/retransmission control unit 202 sends an instruction for performing retransmission control to the data transmission unit 204.

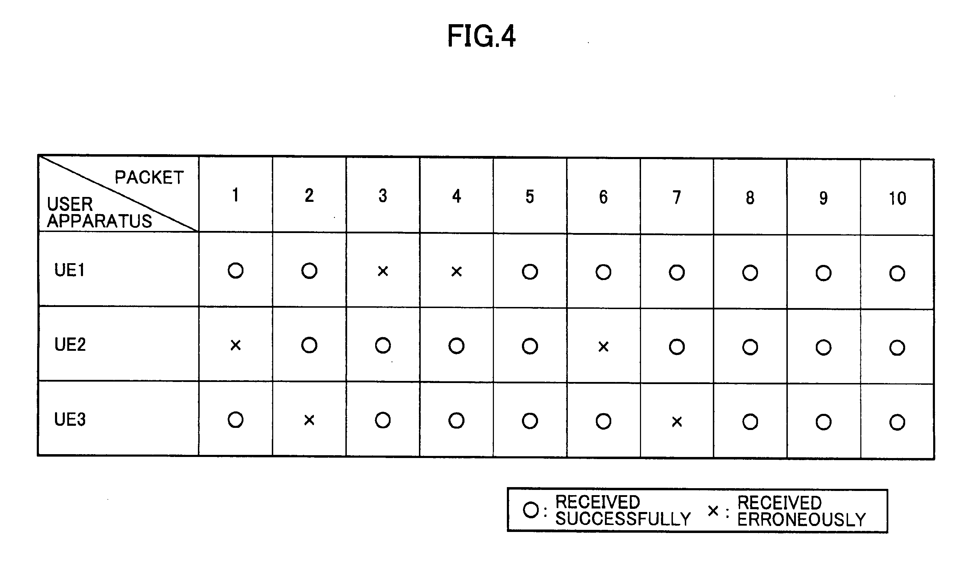

For example, when performing retransmission control, the MCA/retransmission control unit 202 retransmits a packet in which reception error has occurred. More particularly, as shown in Fig. 4, in the case when packets 1-10 are transmitted to UE1-UE3, if UE1 receives packets 3 and 4 erroneously, UE2 receives packets 1 and 6 erroneously, and UE3 receives packets 2 and 7 erroneously, the MCS/retransmission control unit 202 retransmits packets which were erroneously received by a user apparatus. In the above-mentioned case, packets 1, 2, 3, 4, 6 and 7 are retransmitted.

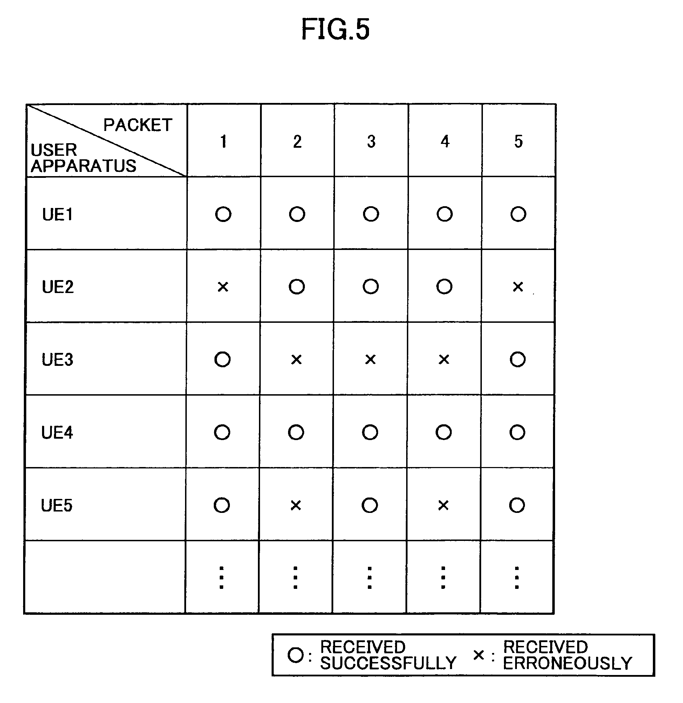

In addition, for example, when performing retransmission control, the MCA/retransmission control unit 202 may retransmit a packet which is erroneously received by many user apparatuses. More particularly, as shown in Fig. 5, in the case when packets 1-5 are transmitted to UE1-UE5, if UE2 receives packets 1 and 5 erroneously, UE3 receives packets 2 - 4 erroneously, and UE5 receives packets 2 and 4 erroneously, the MCS/retransmission control unit 202 retransmits a packet for which the number of user apparatuses which erroneously received the packet is equal to or greater than a predetermined threshold which is determined beforehand. When 2 is set to be the predetermined threshold, packets 2 and 4 are retransmitted.

In addition, for example, when performing retransmission control, the MCS/retransmission control unit 202 may transmit a packet obtained by performing exclusive OR (XOR) operation on packets. In each user apparatus 100, if only one packet is erroneously received among packets on which exclusive OR operation is to be performed, the erroneously received packet can be restored.

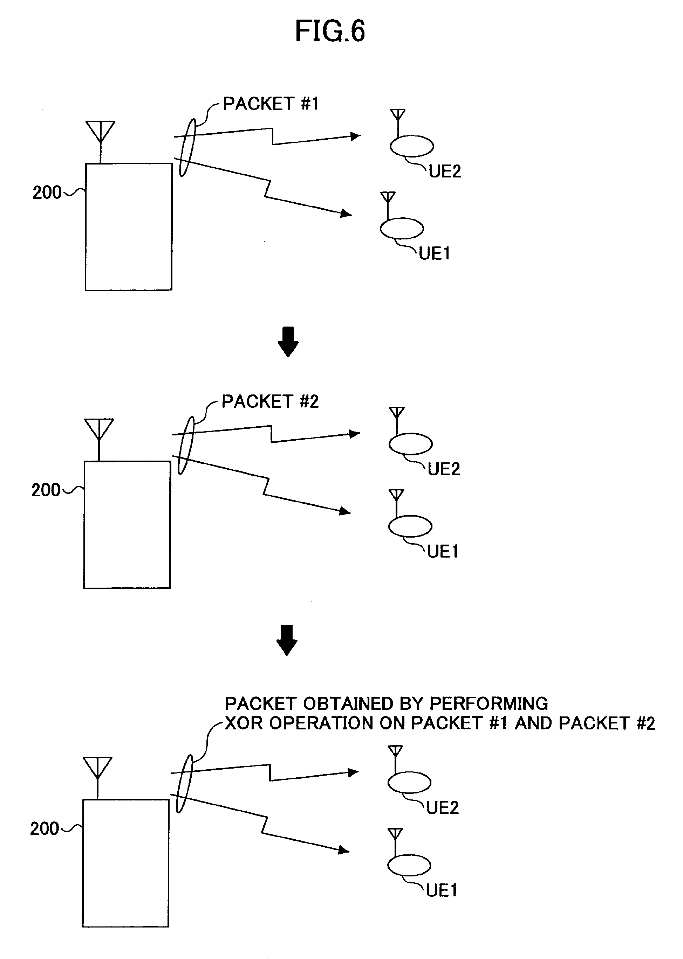

For example, as shown in Fig. 6, a packet #1 is transmitted to the user apparatuses 1 and 2, UE 1 erroneously receives the packet, and UE2 successfully receives the packet. In this case, UE2 stores a hard decision result. Next, a packet #2 is transmitted to the user apparatuses 1 and 2, UE1 successfully receives the packet, and UE2 erroneously receives the packet. In this case, UE1 stores a hard decision result. Next, the base station apparatus 200 transmits a packet obtained by performing exclusive OR operation on the packets #1 and #2. After receiving the packet, each of UE1 and UE2 performs exclusive OR operation on the received packet and the correctly decoded packet. By performing such operation, the packet which was erroneously received can be restored.

More particularly, UE1 restores the erroneously received packet #1 by performing exclusive OR operation between the packet obtained by performing exclusive OR operation on the packets #1 and #2, and the packet #2. UE2 restores the erroneously received packet #2 by performing exclusive OR operation between the packet obtained by performing exclusive OR operation on the packets #1 and #2, and the packet #1.

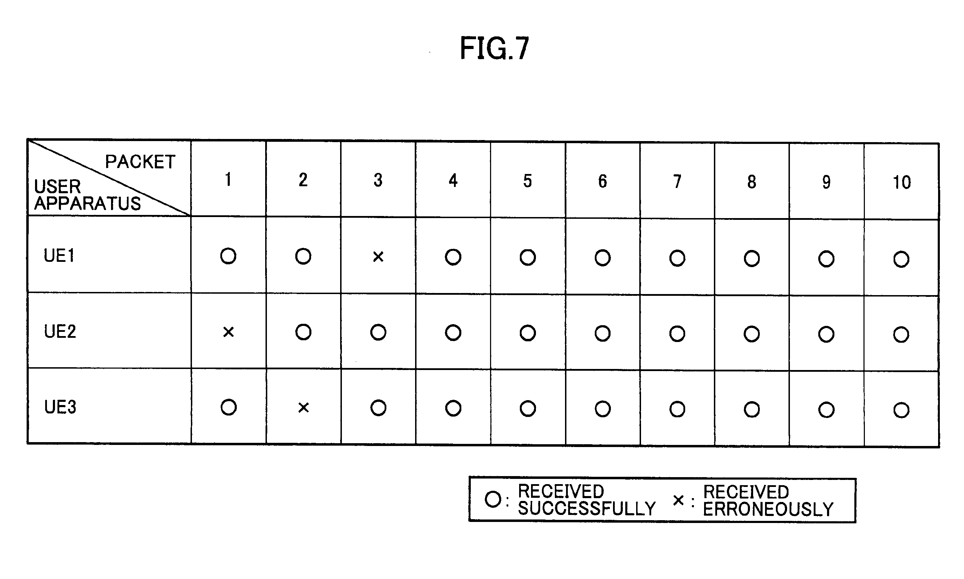

More particularly, each time when the MCS/retransmission control unit 202 transmits a plurality of packets based on packet error rate (PER) of initial transmission, the MCS/retransmission control unit 202 transmits a packet obtained by performing exclusive OR operation on the plurality of packets. For example, when PER=10⁻¹, the MCS/retransmission control unit 202 transmits packets #1-#10 as shown in Fig. 7, and transmits a packet obtained by performing exclusive OR operation on the packets #1-#10 as a packet #11. This method can be applied even when there is no feedback information from the user apparatus 100.

In addition, based on feedback information from user apparatuses 100, the MCS/retransmission control unit 202 transmits a packet obtained by performing exclusive OR operation on a plurality of packets which are common to each user apparatus in that the number of erroneously received packet is one at a maximum among consecutive packets.

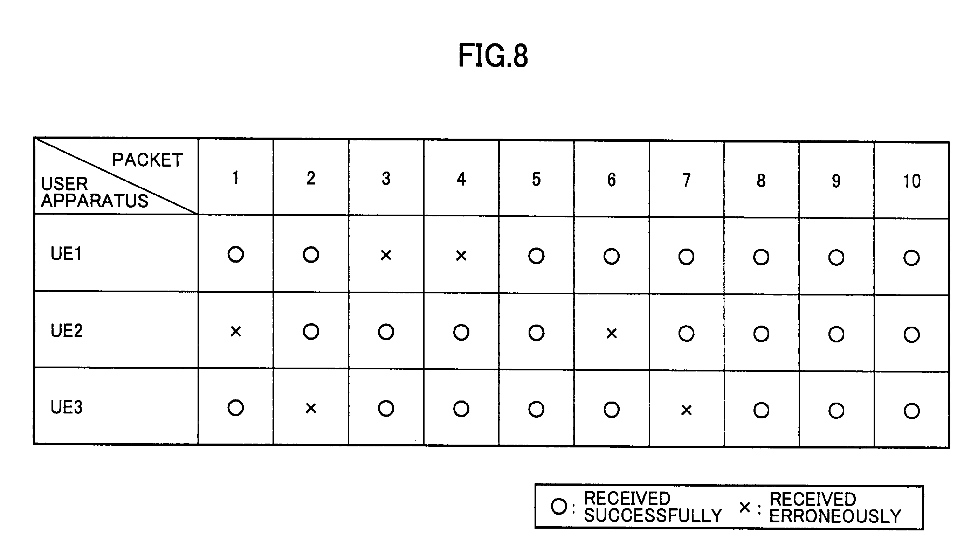

For example, as shown in Fig. 8, packets #1 - #10 are transmitted, a packet obtained by performing exclusive OR operation on packets #1 - #3 is transmitted as a packet #11, and a packet obtained by performing exclusive OR operation on packets #4 - #7 is transmitted as a packet #12. As to transmission of the packet obtained by performing exclusive OR operation on packets #1 - #3, the packets are common to each user in that the number of erroneously received packet in the consecutive packets #1-#3 is one at a maximum. As to transmission of the packet obtained by performing exclusive OR operation on packets #4 - #7, the packets are common to each user in that the number of erroneously received packets in the consecutive packets #4-#7 is 1 at a maximum. By performing such operation, it becomes unnecessary to perform operation including successfully received packets such as packets #8-#10 shown in Fig. 8, so that retransmission control can be performed efficiently.

The data transmission unit 204 performs data transmission and/or retransmission control according to MCS control by the MCS/retransmission control unit 202.

Next, operation of the base station apparatus of the present embodiment is described.

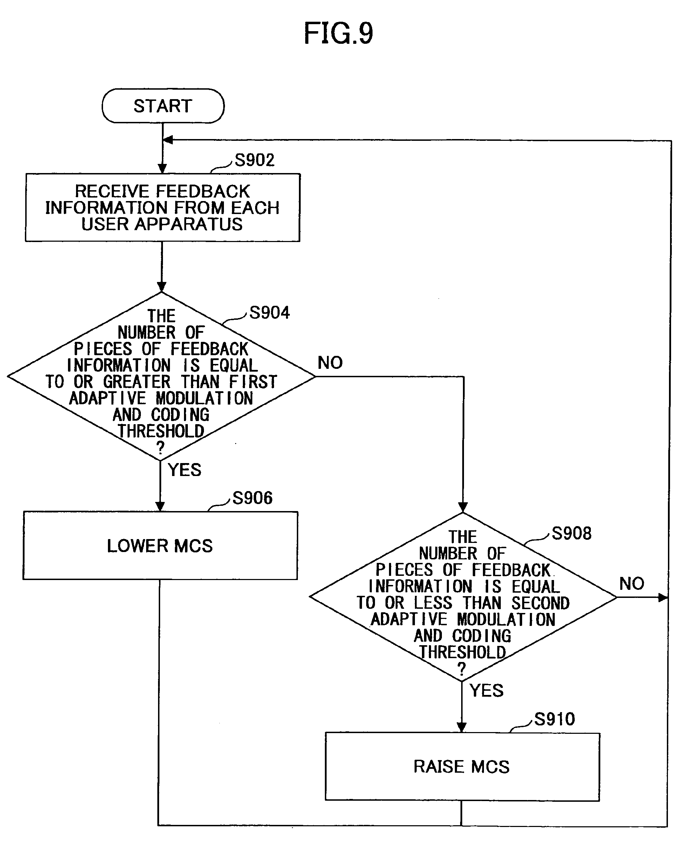

A case in which adaptive modulation and coding is performed based on feedback information from the user apparatus is described with reference to Fig. 9.

The feedback information reception unit 208 receives feedback information from user apparatuses that are receiving MBMS data among user apparatuses residing in an area covered by the base station apparatus 200 (step S902). The user apparatuses receiving MBMS data transmit feedback information when transmitted MBMS data does not satisfy required quality.

The feedback determination unit 206 determines whether the number of pieces of received feedback information is equal to or greater than the predetermined first adaptive modulation and coding threshold which is set beforehand (step 904).

When the number of pieces of received feedback information is equal to or greater than the predetermined first adaptive modulation and coding threshold which is set beforehand (step S904: YES), the MCS/retransmission control unit 202 performs control to lower MCS according to an instruction for lowering MCS input from the feedback determination unit 206 (step S906). After that, the process returns to step S902.

On the other hand, when the number of pieces of received feedback information is not equal to or greater than the predetermined first adaptive modulation and coding threshold which is set beforehand (step S904: NO), the feedback determination unit 206 determines whether the number of pieces of received feedback information is equal to or less than the predetermined second adaptive modulation and coding threshold which is set beforehand (step 908).

When the number of pieces of received feedback information is equal to or less than the predetermined second adaptive modulation and coding threshold which is set beforehand (step S908: YES), the MCS/retransmission control unit 202 performs control to raise MCS according to an instruction for raising MCS input from the feedback determination unit 206 (step S910). After that, the process returns to step S902.

On the other hand, when the number of pieces of received feedback information is not equal to or less than the predetermined second adaptive modulation and coding threshold which is set beforehand (step S908: NO), the process returns to step S902.

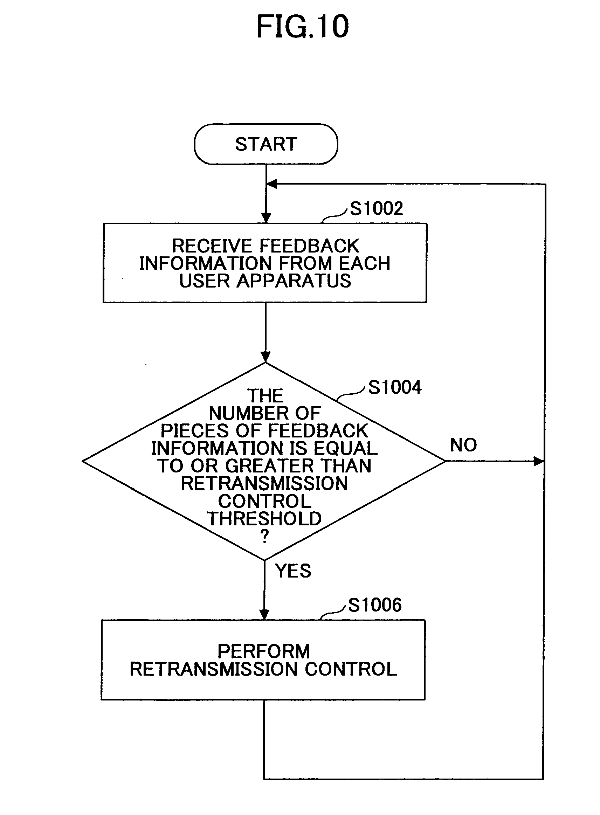

A case in which retransmission control is performed based on feedback information from the user apparatus is described with reference to Fig. 10.

The feedback information reception unit 208 receives feedback information from user apparatuses that are receiving MBMS data among user apparatuses residing in an area covered by the base station apparatus 200 (step S1002). The user apparatuses receiving MBMS data transmit feedback information when transmitted MBMS data does not satisfy required quality.

The feedback determination unit 206 determines whether the number of pieces of received feedback information is equal to or greater than the predetermined retransmission control threshold which is set beforehand (step 1004).

When the number of pieces of received feedback information is equal to or greater than the predetermined retransmission control which is set beforehand (step S1004: YES), the MCS/retransmission control unit 202 performs retransmission control according to an instruction for performing retransmission control input from the feedback determination unit 206 (step S1006). After that, the process returns to step S1002.

On the other hand, when the number of pieces of received feedback information is not equal to or greater than the predetermined retransmission control threshold which is set beforehand (step S1004: NO), the process returns to step S1002.

Next, a radio communication system (MBMS system) of a second embodiment of the present invention is described.

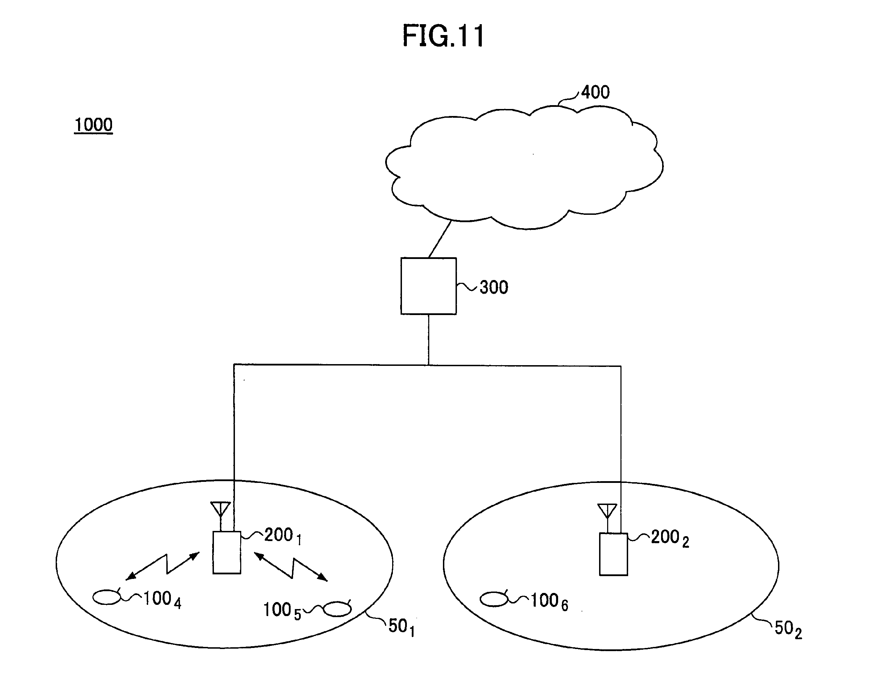

As shown in Fig. 11, the radio communication system of the present invention includes base station apparatuses (eNB: eNode B) 200 (200₁, 200₂), and a plurality of base station apparatuses 100ₙ (100₁, 100₂, 100₃, ···100ₙ, n is an integer of n>0). The base station apparatus 200 is connected to an upper station which is an access gateway apparatus 300, for example. The access gateway apparatus 300 is connected to a core network 400. The mobile station 100ₙ performs communication with the base station apparatus 200 in the cell 50 based on Evolved UTRA and UTRAN. In the present embodiment, although a case is described in which MBMS data is transmitted in two cells, the present embodiment can be also applied to a case in which MBMS data is transmitted in more than two cells.

The above-mentioned MBMS system is preferably applied to a single-cell mode. The MBMS system of the present embodiment is preferably applied to a multi-cell mode, that is, to a MBSFN mode, for example.

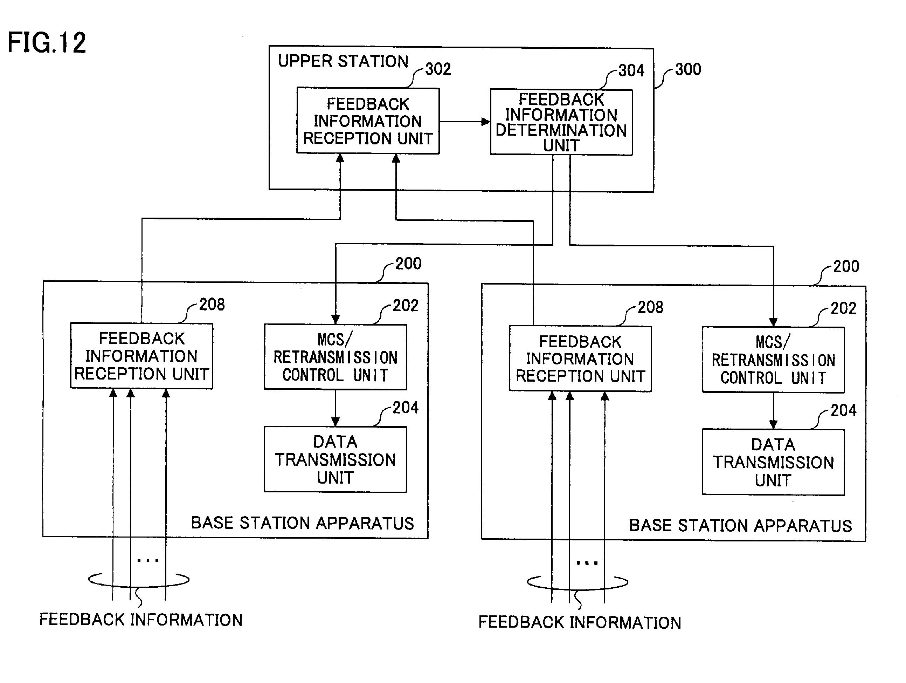

The upper station 300 of the present embodiment, which is an access gateway, for example, includes a feedback information reception unit 302 and a feedback information determination unit 304 as shown in Fig. 12.

The feedback information determination unit 304 receives feedback information transmitted from the base station apparatuses 200, and inputs the feedback information into the feedback information determination unit 304. Feedback information transmitted from each base station apparatus 200 may be combined for each user. The feedback information determination unit 304 performs processing the same as that of the above-mentioned feedback information determination unit 206.

The feedback determination unit 304 determines whether to perform adaptive modulation and coding and/or retransmission control based on feedback information from the user apparatus 100, and transmits the result to the MCS/retransmission control unit 202. When the number of pieces of received feedback information is equal to or greater than the predetermined first adaptive modulation and coding threshold which is determined beforehand, the feedback determination unit 304 determines to perform adaptive modulation and coding control. More particularly, control for lowering MCS is performed. That is, control for decreasing the modulation multilevel number and/or for lowering channel coding rate is performed.

In addition, when the number of pieces of received feedback information is equal to or greater than the predetermined retransmission control threshold which is determined beforehand, the feedback determination unit 304 determines to perform retransmission control.

In addition, when the number of pieces of received feedback information is equal to or less than the predetermined second adaptive modulation and coding threshold which is determined beforehand, the feedback determination unit 304 determines to perform adaptive modulation and coding control. More particularly, control for increasing MCS is performed. That is, control for increasing the modulation multilevel number and/or for raising channel coding rate is performed.

As shown in Fig. 12, the base station apparatus 200 of the present embodiment includes the MCS/retransmission control unit 202, the data transmission unit 204 and the feedback information reception unit 208.

Control information transmitted from the user apparatus 100 is received by the feedback information reception unit 208, and is transmitted to the feedback determination unit 302 in the upper station 300.

The MCS/retransmission control unit 202 performs adaptive modulation and coding control and/or retransmission control based on information indicating whether to perform adaptive modulation and coding control and/or information indicating whether to perform retransmission control, which are transmitted by the feedback determination unit 304 of the upper station.

The data transmission unit 204 performs data transmission and/or retransmission control according to MCS control by the MCS/retransmission control unit 202.

Next, a radio communication system (MBMS system) according to a third embodiment of the present invention is described.

The configuration of the radio communication system and the configuration of the base station apparatus in the present embodiment are the same as the configurations described in the first and second embodiments.

In the radio communication system of the present embodiment, CQI and/or scheduling request is transmitted from the user apparatus 100 as feedback information. When required quality is not satisfied, each user feeds back CQI and/or scheduling request. By performing such operation, since resources that have already been kept are used, feedback information can be transmitted without increasing redundant control information.

Next, a radio communication system (MBMS system) according to a fourth embodiment of the present invention is described.

The configuration of the radio communication system and the configuration of the base station apparatus in the present embodiment are the same as the configurations described in the first and second embodiments.

In the radio communication system of the present embodiment, negative acknowledgement (NACK) indicating that data is not correctly received is transmitted from the user apparatus 100 as feedback information. Each user feeds NACK back to the base station apparatus when the required quality is not satisfied. By performing operation like this, since each user is caused to perform transmission using common resources, the control information amount can be decreased. Further, for decreasing the control information amount, the period during which the user apparatus can perform transmission may be restricted.

According to the above-mentioned embodiment, even when there is imbalance between users located at the cell edge and users located at an area of the cell center, control can be performed so as to perform retransmission, and/or to perform transmission by lowering the rate, for users located at the cell edge, by using the feedback information.

For the sake of convenience of explanation, the present invention is described by using some embodiments. But, classification into each embodiment is not essential in the present invention, and equal to or more than two embodiments may be used as necessary. While specific numerical value examples are used to facilitate understanding of the present invention, such numerical values are merely examples, so that any appropriate value may be used unless specified otherwise.

As described above, while the present invention is described with reference to specific embodiments, the respective embodiments are merely exemplary, so that a skilled person will understand variations, modifications, alternatives, and replacements. For convenience of explanation, while the apparatus according to the embodiments of the present invention is explained using functional block diagrams, such an apparatus as described above may be implemented in hardware, software, or a combination thereof. The present invention is not limited to the above embodiments, so that variations, modifications, alternatives, and replacements are included in the present invention without departing from the spirit of the present invention.

The present international application claims priority based on Japanese patent application No.2007-121302, filed in the JPO on May 1, 2007, and the entire contents of the Japanese patent application No.2007-121302 is incorporated herein by reference.

## Claims

1. A base station apparatus for transmitting multicast data and/or broadcast data to a user apparatus,
wherein the user apparatus transmits feedback information for reporting that the multicast data and/or the broadcast data do not satisfy required quality, the base station apparatus comprising:
a feedback information determination unit configured to obtain the number of notifications of the feedback information, and to determine whether to perform adaptive modulation and coding based on the number of notifications; and
a control unit configured to change a combination of a modulation scheme and a channel coding scheme which are applied to multicast data and/or broadcast data according to a determination result of the feedback information determination unit.

2. The base station apparatus as claimed in claim 1, comprising a retransmission control unit configured to perform retransmission control according to the determination result of the feedback information determination unit,
wherein the feedback information determination unit obtains the number of notifications of the feedback information, and determines whether to perform retransmission control based on the number of notifications.

3. The base station apparatus as claimed in claim 1, wherein, when the number of notifications is equal to or greater than a first threshold, the feedback information determination unit determines to change the combination of the modulation scheme and the channel coding scheme in order to perform control to decrease a multilevel number and/or lowering a channel coding rate.

4. The base station apparatus as claimed in claim 3, wherein, when the number of notifications is less than the first threshold and is equal to or less than a second threshold which is less than the first threshold, the feedback information determination unit determines to change a combination of a modulation scheme and a channel coding scheme in order to perform control for increasing a multilevel number and/or raising a channel coding rate.

5. The base station apparatus as claimed in claim 2, wherein the retransmission control unit transmits a packet obtained by performing exclusive OR operation on a predetermined number of packets.

6. The base station apparatus as claimed in claim 2, wherein, based on feedback information from user apparatuses, the retransmission control unit transmits a packet obtained by performing exclusive OR operation on a plurality of packets which are common to each user apparatus in that the number of erroneously received packet is one at a maximum among consecutive packets.

7. The base station apparatus as claimed in claim 1, wherein the user apparatus reports the feedback information using signaling of higher layer as the feedback information.

8. The base station apparatus as claimed in claim 1, wherein the user apparatus reports CQI and/or scheduling request as the feedback information.

9. The base station apparatus as claimed in claim 1, wherein the user apparatus reports negative acknowledgement as the feedback information.

10. A communication control method in a base station apparatus for transmitting multicast data and/or broadcast data to a user apparatus,
wherein the user apparatus transmits feedback information for reporting that the multicast data and/or the broadcast data do not satisfy required quality, the communication control method comprising:
a feedback information receiving step of receiving feedback information transmitted from each user apparatus;
a feedback information determination step of obtaining the number of notifications of the feedback information, and determining whether to perform adaptive modulation and coding based on the number of notifications; and
a control step of changing a combination of a modulation scheme and a channel coding scheme which are applied to the multicast data and/or the broadcast data according to a determination result in the feedback information determination step.
